# EUROPÄISCHE PATENTANMELDUNG

(11) **EP 0 827 312 A2**
(43) Veröffentlichungstag der Anmeldung: **04.03.1998**
(21) Anmeldenummer: 97113642.9
(22) Anmeldetag: 07.08.1997
(51) Int. Cl.: H04L 29/06

(54) **Verfahren zur Änderung der Konfiguration von Datenpaketen**

(30) Priorität: 22.08.1996 DE 19633787; 19.06.1997 DE 19726007
(71) Anmelder: ROBERT BOSCH GMBH, 70442 Stuttgart (DE)
(72) Erfinder: Vogel, Peter, 31139 Hildesheim (DE); Fischer, Ralf, 31199 Diekholzen (DE)

(57) **Zusammenfassung**

Es wird ein Verfahren zur Änderung der Konfiguration von Datenpaketen vorgeschlagen, bei dem ein im Datenpaket der Quelle eingefügtes Feld die Konfigurationsänderung, z.B. Änderung des Fehlerschutzes oder der Paketlänge anzeigt.

## Beschreibung

### Stand der Technik

Die Erfindung geht aus von einem Verfahren zur Änderung der Konfiguration von Datenpaketen nach der Gattung des Hauptanspruchs.

Aus der ITU-T Draft Recommendation H.223 Annex A 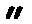 Multiplexing protocoll for low bitrate mobile communication 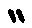 ist ein Datenprotokoll bekannt, das ein Multiplexverfahren spezifiziert, mit dem digitale Informationen verschiedener Datenquellen seriell über fehlerbehaftete Kanäle übertragen werden können. In diesem Protokoll werden die Rahmenstrukturen, die Formate der Daten- und Steuerfelder und eine Struktur für die vom Multiplexer zu übertragenden Daten das Multiplexprotokoll festgelegt. Das Multiplexprotokoll ermöglicht die Verarbeitung von logischen Informationen, die über die Adaptationsebene auf die Multiplexebene gelangen, in einheitliche Datenpakete. Das Protokoll ermöglicht die Übertragung von beliebigen Kombinationen digitaler Audio-und Videodaten oder anderer Informationen über eine Datenleitung. Es verwendet zur Rahmenerkennung ein Synchronisationmuster vor jedem Multiplexpaket vor. Ihm wird ein HEADER und das Informationsfeld mit einer festen Paketlänge nachgestellt. Die Datenpakete besitzen feste Längen, womit eine besonders stabile Synchronisation erreicht wird. Die Datenpakete beinhalten auch Fehlerschutzmaßnahmen, die sich über den HEADER und/oder das Informationsfeld erstrecken. Jede bekannte Fehlerschutzmaßnahme geht auf Kosten der Bandbreite der Datenübertragung. Beim Verbindungsaufbau werden über einen Kontrollkanal Daten gesendet, die dem Empfänger signalisieren, mit welchem Fehlerschutz die Multiplexpakete ausgestattet sind und welche Paketlänge übertragen wird. Mit den bekannten Multiplexprotokollen ist es nicht möglich, die Fehlerschutzmaßnahmen an die jeweiligen Übertragungsgegebenheiten anzupassen.

### Vorteile der Erfindung

Das erfindungsgemäße Verfahren mit den kennzeichnenden Merkmalen des Hauptanspruchs hat demgegenüber den Vorteil, daß eine Konfigurationsänderung des Datenpaketes während der Übertragung stattfinden kann, wobei die Änderung über den Kontrollkanal angekündigt und durch ein beliebiges Feld im Datenpaket markiert wird. Dadurch ist es möglich, die Bandbreite der Datenübertragung wesentlich besser auszunützen, weil Fehlerschutzmaßnahmen an die Übertragungsbedingungen angepaßt werden können.

Durch die in den Unteransprüchen aufgeführten Maßnahmen sind besonders vorteilhafte Weiterbildungen und Verbesserungen des im Hauptanspruch angegebenen Verfahrens möglich.

Vorteilhafterweise wird im HEADER des Multipex- oder des Quellenpakets die Änderung des Fehlerschutzes durch das Wechseln des Wertes eines Bits angekündigt.

Für die Anpassung an verschiedene Übertragungsbedingungen ist es von Vorteil, daß im HEADER durch Setzen eines Bits auch die Änderung der Datenpaketlänge angezeigt werden kann.

Ebenfalls ist es möglich ohne eine weitere Veränderung in der HEADER-Struktur die Änderung des Fehlerschutzes über den HEADER-Zähler (HEADER-COUNTER) anzuzeigen.
Der HEADER-COUNTER kann vorteilhafterweise auch für die Anzeige der Änderung der Datenpaketlänge herangezogen werden. Dadurch wird vorteilhafterweise der Änderung für das n-te Datenpaket angekündigt.
Eine Änderung der Konfiguration ist ebenfalls über eine zusätzliches Zählerfeld möglich, was ebenfalls zu einer längere Vorbereitung auf die Änderung eingesetzt werden kann.

Weiterhin ist es von Vorteil, wenn die Änderung der Konfiguration der Datenpakete nicht im HEADER des Multiplexpaketes, sondern im HEADER des Quellenpaketes angezeigt wird.

### Zeichnung

Ein Ausführungsbeispiel der Erfindung ist in der Zeichnung dargestellt und wird in nachfolgender Beschreibung näher erläutert. Es zeigt
Figur 1 die Struktur der Datenebenen für die Mulitplexdatenübertragung,
Figur 2 ein Multiplexpaket,
Figur 3 die Struktur des HEADERs des Quellenpaketes, und
Figur 4 die Struktur des HEADERs des Mulitplexpaketes.

### Beschreibung des Ausführungsbeispiels

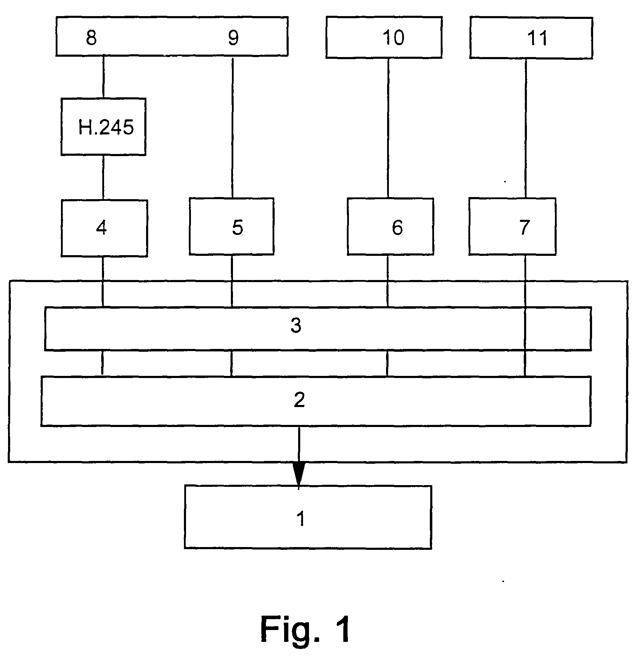

Die Datenübertragung von beliebigen Datensignalen findet nach Figur 1 über hierarchisch gegliederte Ebenen statt. Von den einzelnen Datenendgeräten kommen die zum Teil analogen Signale über die Anwendungsebene 8,9,10,11 zur Codierungsebene 4,5,6,7. Anschließend werden die Inhalte der logischen Kanäle an die Adaptationsebene 3 des Multiplexers weitergegeben. Immer noch in getrennten logischen Kanälen werden die Daten an die Multiplexebene 2 weitergereicht.
Diese Ebene verarbeitet die Vielzahl an logischen Kanälen zu einem logischen Kanal und gibt Multiplex-Protocoll-Data-Units (Mux-PDU) aus.
Jede Mux-PDU wird nach dem Protokoll mit Informationen der Quellen gefüllt. Tische Quellen für das Datenübertragungsverfahren sind z.B. Audioquellen 10, Videoquellen 11, die in der Codierungsebene codiert werden.
Zusätzlich zu den einzelnen Datenquellen existiert ein Kontrollkanal 4, der die Spezifikationen des Protokolls vorgibt. Der Standard für den Kontrollkanal wird mit H.245 bezeichnet.

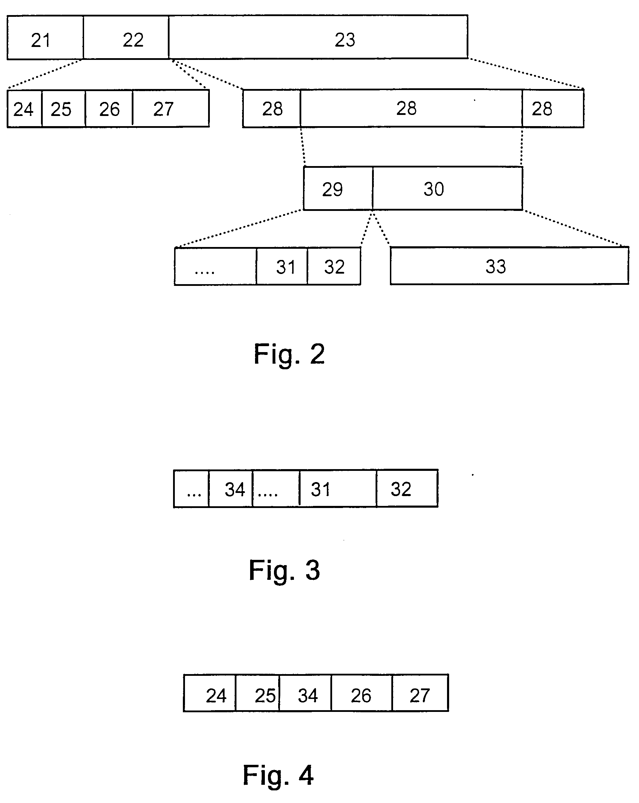

Figur 2 zeigt das allgemeine Format eines Mulitplexpaketes, wie es in der Multiplexebene 2 und Adaptationsebene 3 zusammengestellt wird. Das Multiplexpaket besteht aus einem Synchronisationswort 21, dem HEADER 22 und dem Informationsfeld 23. Im HEADER des Multiplexpaketes werden Angaben über die weitere Verarbeitung des Informationsfeldes weitergegeben. Das Feld 24 beinhaltet den Multiplexcode, anschließend wird ein Feld HC, der HEADER-COUNTER 25, übertragen. Um den HEADER vor Übertragungsfehler zu schützen, werden zwei weitere Codes der CRC 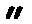 Cyclic-Redundancy-Code 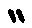 und die FEC 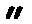 Forward-Error- Correction 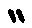 übertragen. Im Informationsfeld 23 des Multiplexpaketes werden die in der Adaptationsebene 3 gepackten Quellenpakete 28 untergebracht. Die Quellenpakete können von verschiedenen Quellen stammen und sie können verschiedene Längen aufweisen. Die einzelnen Quellenpakete bestehen wiederum aus einem HEADER 29 sowie dem Informationsfeld 30. Auch im HEADER der Quellenpakete sind fehlerkorrigierende Codes, nämlich CRC 31 und FEC 32 untergebracht. Das eigentliche Informationsfeld 33 beinhaltet die reinen Daten sowie einen variablen Fehlerschutz.

Das HEADER-Feld des Multiplexpakets 22 spezifiziert wie die Aufteilung des Informationsfeldes des Multiplexpakets 23 für die verschiedenen Informationsquellen erfolgt, d.h. in welchem Verhältnis die Informationen der Quellen in das Informationsfeld 23 eingefüllt werden. Das Feld HC 25 bezeichnet einen Vorwärts- oder Rückwärtszähler, der angibt, wieviele Multiplexpakete mit gleicher Paketlänge noch übertragen werden, bzw. schon übertragen worden sind. Um eine robuste Übertragung über unterschiedlichste fehlerbehaftete Datenkanäle zu gewährleisten, wird die Information der verschiedenen Quellen 33 mit einem flexiblen Fehlerschutz versehen. Beim Verbindungsaufbau wird über einen sogenannten Kontrollkanal 4 dem Empfänger signalisiert, wie groß der Fehlerschutz für die Information einer Datenquelle ist. Nun ist es für verschiedene Anwendungen wünschenswert, den Fehlerschutz während einer Übertragung zu ändern, um eine optimale Anpassung an verschiedene Übertragungsverhältnisse zu ermöglichen.
Befindet sich der Empfänger beispielsweise gerade unter einer abschattenden Brücke, sollte der Fehlerschutz für die Datenübertragung erhöht werden. Bewegt sich der Empfänger dagegen nur sehr langsam oder hat sogar direkte Sicht zur Sendestation, kann der Fehlerschutz verringert und dadurch die Bandbreite erhöht werden. Es besteht zwar die Möglichkeit, dem Empfänger über den Kontrollkanal 4 eine neue Konfiguration des Fehlerschutzes zu signalisieren, aber da der Kontrollkanal keine zeitliche Korrelation zu den Daten der Quellen besitzt, ist es nicht möglich zu übermitteln, wann das erste Paket mit geändertem neuen Fehlerschutz übertragen wird. Es ist für eine korrekte Decodierung des empfangenen Datenpaketes aber unabdingbar, daß die Art des Fehlerschutzes bereits beim ersten empfangenen Datenpaket bekannt ist. Daher wird nach dem erfindungsgemäßen Verfahren ein Bit im HEADER des Quellenpakets definiert, das die Änderung des Fehlerschutzes signalisiert.

In Figur 3 ist beispielhaft der HEADER eines Quellenpaketes 29 skizziert. Im HEADER ist ein Feld CC (Configuration-Change) 34 definiert. Zu Beginn einer Übertragung ist dieses Bit auf einen definierten Wert z.B. 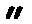 0 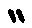 gesetzt. Während der Verbindungsdauer kann dann über den Kontrollkanal dem Empfänger eine Konfigurationsänderung für eine Datenquelle signalisiert werden, also z.B. eine Erhöhung des Fehlerschutzes für eine Datenquelle. Gemäß dem Protokoll des Kontrollkanals schickt der Empfänger dem Sender eine Bestätigung dieses Änderungswunsches. Nachdem der Sender diese Bestätigung empfangen hat, kann er im nächsten zu sendenden Paket den veränderten Fehlerschutz anwenden. In diesem Paket wird dann das CC-Bit auf 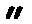 1 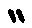 gesetzt. Der Empfänger erkennt dadurch genau das 1. Paket mit einem veränderten Fehlerschutz. Das CC-Bit bleibt nun für alle nachfolgenden Pakete auf 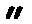 1 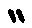 bis eine erneute Konfigurationsänderung des Senders gewünscht wird. Nach der Bestätigung durch dem Empfänger wird dann im 1. Paket mit der neuen Konfiguration das CC-Bit wieder zu 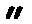 0 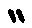 gesetzt.
Ebenso kann die Änderung des Fehlerschutzes für ein gesamtes Multiplexpaket über ein CC-Bit im HEADER des Multiplexpaketes selbst signalisiert werden.

Um eine fehlerrobuste Übertragung zu gewährleisten, besitzen die Multiplexpakete eine feste Länge. Es ist oft wünschenswert, während einer Übertragung eine Änderung der Paketlänge vornehmen zu können. Dadurch ist eine flexible Anpassung an variierende Kanalzustände möglich. Eine neue Paketlänge kann über den Kontrollkanal signalisiert werden.
Auch hier besteht das Problem, daß der Empfänger den genauen Zeitpunkt des Eintreffens eines Paketes mit neuer Länge nicht kennt. Durch Einführung des CC-Bits in den HEADER des Multiplexpaketes kann der Beginn von Paketen mit neuer Länge signalisiert werden. Wie bei den Datenpaketen der einzelnen Quellen wird auch im Multiplexpaket das CC-Bit am Anfang einer Übertragung auf 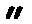 0 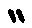 gesetzt. Nach dem Längenänderungswunsch des Senders und der Bestätigung durch dem Empfänger über den Kontrollkanal wird das CC-Bit im 1.
Paket mit neuer Länge auf 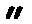 1 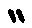 gesetzt. Es bleibt so lange auf 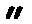 1 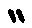 , bis eine erneute Änderung erfolgt. In den bisher beschriebenen Ausführungsbeispielen wurden Konfigurationsänderungen, die sich sowohl auf Änderungen des Fehlerschutzes, als auch auf eine Änderung der Paketlänge bezogen, über ein spezielles Kontrollbit (CC) 34 angezeigt.
Eine weitere Ausführungsform wählt zur Anzeige einer Konfigurationsänderung den bereits vorhandenen HEADER-COUNTER (HC) 25. Das HC-Feld überträgt einen Zähler, der inkrementiert wird und angibt, wieviele Multiplexpakete mit identischem Multiplexcode noch übertragen werden. Dieses Abwärtszählen kann auch dazu verwendet werden, dem Empfänger zu signalisieren, wann eine Längenänderung des Multiplexpaketes erfolgt. Nachdem der Sender die Bestätigung des Längenänderungswunsches durch den Empfänger erhalten hat, kann der HEADER-COUNTER auf einen bestimmten Wert gesetzt werden. Ist der Zählerstand 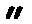 0 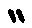 erreicht, erfolgt die tatsächliche Längenänderung. Durch diesen Zähler kann die Längenänderung im Empfänger vorausgesagt und dadurch eine robustere Übertragung als mit dem CC-Bit erreicht werden.

Für ein Multiplexpaket ist es außerdem wünschenswert, das Synchronisationswort SYNC, die Stärke des Fehlerschutzes für den HEADER oder die Größe des CRC-Feldes ändern zu können.
Diese Änderung der Parameter kann wieder über den Kontrollkanal signalisiert werden. Zur Signalisierung des Inkrafttretens einer Änderung dieser Parameter kann nun nicht das CC-Feld genutzt werden, da z.B. bei einer Änderung des Fehlerschutzes für den HEADER selbst dieses Feld nicht decodiert werden kann, ohne den neuen Parameter zu kennen.
Durch Verwendung des HEADER-COUNTERs aber kann der Empfänger genau wie im oben beschriebenen Verfahren der Anzeige einer Längenänderung, das 1. Paket mit neuer Konfiguration vorab bestimmen.

Es ist zudem möglich die ursprüngliche Funktion des HC-Feldes zu erhalten, indem dem HEADER ein separater Zähler zugeordnet wird. Ebenso ist es möglich mit diesem Zähler im HEADER Konfigurationsänderungen in den Quellenpaketen zu signalisieren.
Ferner kann auch im HEADER der Quellenpakete ein Zähler eingesetzt werden, um Konfigurationsänderungen zu signalisieren. Mit einem Zähler können dann auch Parameteränderungen des Quellenpaket-HEADERs selbst signalisiert werden, d.h. wie beim HEADER des Multiplexpaketes kann der Fehlerschutz des Quellenpaket-HEADERs konfiguriert werden. Außerdem ist es möglich, in einem beliebigen Feld innerhhalb des Quellenpakets einen Zähler zu übertragen , um Konfigurationsänderungen vorab zu signnalisieren. Ein spezielles Multiplex- oder Quellenfformat ist dafür nichtt notwendig. Durch den Einsatz eines speziellen Feldes, entweder im HEADER des Multiplex- oder im Quellenpaket, ist es möglich eine flexible Anpassung an unterschiedlichste Kanalzustände zu erreichen. Damit wird eine effiziente Ausnutzung der vorhandenen Bandbreite des Kanals möglich.

## Patentansprüche

1. Verfahren zur Änderung der Konfiguration von Datenpaketen, die zwischen zwei Stationen übertragen werden, wobei die Datenpakete ein Synchronisationsmuster SYNC (21), einen HEADER (22) und ein INFORMATION-Feld (23) aufweisen, und wobei weiterhin Kontrolldaten übertragen werden, die Informationen bezüglich der Verarbeitung der Datenpakete enthalten, dadurch gekennzeichnet, daß eine Änderung der Konfiguration der Datenpakete über die Kontrolldaten angekündigt wird und in den Datenpaketen ein Feld übertragen wird, dessen Inhalt eine Änderung der Konfiguration für das gerade übertragenen Datenpaket und/oder die folgenden Datenpakete anzeigt.

2. Verfahren zur Änderung der Konfiguration von Datenpaketen nach Anspruch 1, dadurch gekennzeichnet, daß der HEADER (22, 29) der Datenpakete ein Bit enthält, das bei einer Änderung des Fehlerschutzes gesetzt oder rückgesetzt wird.

3. Verfahren zur Änderung der Konfiguration von Datenpaketen nach Anspruch 1 oder 2, dadurch gekennzeichnet, daß der HEADER (22, 29) ein Bit, das bei einer Änderung der Datenpaketlänge gesetzt oder rückgesetzt wird.

4. Verfahren zur Änderung der Konfiguration von Datenpaketen nach Anspruch 1 bis 3, dadurch gekennzeichnet, daß der Zähler des Feldes HEADER COUNTER (25) eine Änderung des Fehlerschutzes vorab anzeigt.

5. Verfahren zur Änderung der Konfiguration von Datenpaketen nach Anspruch 1 bis 4, dadurch gekennzeichnet, daß der Zähler des Feldes HEADER COUNTER (25) eine Änderung der Datenpaketlänge vorab anzeigt.

6. Verfahren zur Änderung der Konfiguration von Datenpaketen nach Anspruch 1 bis 5, dadurch gekennzeichnet, daß der Zähler des Feldes HEADER COUNTER (25) eine Änderung von Feldern im HEADER vorab anzeigt.

7. Verfahren zur Änderung der Konfiguration von Datenpaketen nach Anspruch 1,4 bis 6, dadurch gekennzeichnet, daß zur Signalisierung von Konfigurationsänderungen eines Multiplex-(21, 23) und eines Quellenpaketes (28) ein aus n-bit bestehender Zähler in einem Feld eines Multiplex- oder Quellenpaketes übertragen wird, wobei der Zähler anzeigt, wieviele Pakete oder Daten noch mit der alten Konfiguration übertragen werden.

8. Verfahren zur Änderung der Konfiguration von Datenpaketen nach Anspruch 1 bis 7, dadurch gekennzeichnet, daß die Änderung der Konfiguration des Quellenpaketes im HEADER des Quellenpaketes angezeigt wird.

9. Verfahren zur Änderung der Konfiguration von Datenpaketen nach Anspruch 1 bis 7, dadurch gekennzeichnet, daß die Änderung der Konfiguration des Quellenpaketes im HEADER des Multiplexpaketes angezeigt wird.
